# FASCICULE DE BREVET EUROPEEN

(11) **EP 2 506 596 B1**
(45) Date de publication et mention de la délivrance du brevet: **18.09.2013**
(21) Numéro de dépôt: 12156191.4
(22) Date de dépôt: 20.02.2012
(51) Int. Cl.: H04Q 1/14

(54) **Dispositif de connexion de câbles**
Kabelverbindungsvorrichtung
Device for connecting cables

(30) Priorité: 31.03.2011 FR 1152678
(43) Date de publication de la demande: 03.10.2012
(73) Titulaire: Nexans, 75008 Paris (FR)
(72) Inventeur: Frazier, Virginie, 08430 La Horgne (FR)
(74) Mandataire: Gauer, Pierre

(56) Documents cités:
- WO-A1-2005/107275
- US-A1- 2006 154 513
- US-A1- 2008 115 956

## Description

La présente invention a pour objet un dispositif de connexion de câbles, le dispositif comprenant des tiroirs de brassage. Elle s'applique tout particulièrement aux armoires de répartition ou baies de brassage dans les centres de traitement de données.

Les centres de traitement de données, également appelés Datacenter en langue anglaise, sont des lieux climatisés où se trouvent différents équipements électroniques, comme par exemple des serveurs, des ordinateurs, des équipements de télécommunication ou encore des baies de brassage.

Les baies de brassage sont des armoires de connexion dans lesquelles on vient connecter des câbles. Les câbles peuvent notamment être des câbles comprenant des paires de conducteurs, comme du cuivre, et/ou des câbles d'acheminement de fibres optiques. La connexion est réalisée dans des boîtiers de connexion appelés tiroirs de brassage. Des baies de brassage sont par exemple décrites dans le document US 2006/0154513.

La présente invention a pour objectif de réduire la surface au sol occupée par les baies de brassage.

L'invention a ainsi pour objet un dispositif de connexion de câbles.

Le dispositif selon l'invention comprend une armature délimitant une face verticale avant et au moins une face verticale inclinée par rapport à la face avant, l'armature étant destinée à recevoir des tiroirs de brassage de forme allongée et munis d'une face avant et d'une face arrière, lesdites faces avant des tiroirs de brassage étant sensiblement alignées dans le plan de chaque face inclinée de l'armature, chaque tiroir de brassage comprenant deux coins tronqués situés au niveau de la face arrière du tiroir de brassage et réduisant localement la largeur des tiroirs de brassage. En outre, l'armature comprend au moins une partie de section horizontale trapézoïdale rectangle à l'intérieure de laquelle sont disposés les tiroirs de brassage, le trapèze présentant deux faces opposées parallèles, dont une petite base et une grande base, et deux faces opposées non parallèles, l'une des faces opposées non parallèles définissant la face verticale inclinée de l'armature, un premier coin tronqué étant situé du côté de la grande base et un deuxième coin tronqué étant situé du côté de la face opposée à la face verticale inclinée.

Les tiroirs de brassage peuvent comprendre des moyens de connexion aptes à connecter des paires de conducteurs ou des fibres optiques.

Les tiroirs de brassage peuvent comprendre des zones de lovage de fibres optiques.

D'autres caractéristiques et avantages de la présente invention apparaîtront plus clairement à la lecture de la description suivante donnée à titre d'exemple illustratif et non limitatif et faite en référence aux dessins annexés sur lesquels :
- la figure 1 est une vue de dessus d'un dispositif selon l'invention,
- les figures 2 et 3 illustrent un tiroir de brassage utilisé dans le dispositif selon l'invention, et
- la figure 4 est une vue en perspective d'un dispositif selon l'invention.

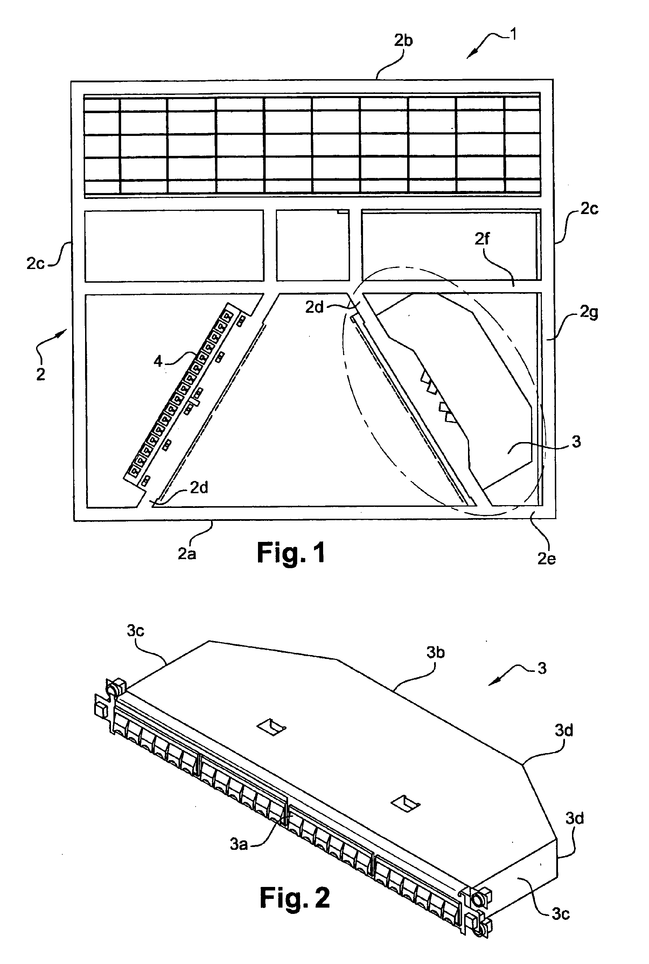

Tel qu'illustré à la figure 1, un dispositif de connexion 1 selon l'invention, typiquement une baie de brassage, comprend une armature 2 destinée à supporter des tiroirs de brassage 3.

L'armature 2 délimite une face avant 2a, une face arrière 2b, et deux faces latérales 2c. Les quatre faces 2a,2b,2c forment par exemple une structure parallélépipédique.

L'armature 2 comprend en outre une ou plusieurs faces 2d inclinées par rapport à la face avant 2a. Les faces inclinées 2d sont typiquement au nombre de deux.

L'armature 2 est apte à recevoir des tiroirs de brassage 3 empilés verticalement sur toute la hauteur des faces inclinées 2d. Les tiroirs 3 sont plats et présentent une section horizontale sensiblement rectangulaire, à l'exception des coins du rectangle éloignés de la face inclinés 2d, qui sont tronqués, de manière à ce que la largeur de la section soit raccourcie à proximité des petits côtés du rectangle.

Le positionnement des tiroirs 3 au niveau de la face inclinée 2d permet de faciliter le brassage des câbles. En effet, si le brassage s'effectuait sur une face non inclinée, il faudrait des câbles plus longs. L'utilisation de la face inclinée permet également de visualiser l'identification des câbles. Si la face 2d était orthogonale à la face avant 2a, il serait plus difficile d'identifier les câbles.

Les coins tronqués des tiroirs 3 permettent ainsi de réduire la largeur de l'armature 2, ce qui permet d'optimiser la surface au sol dans le centre de traitement de données. On peut par exemple passer d'une baie de brassage de dimensions 1200 mm x 1000 mm avec des tiroirs rectangulaires à coins non tronqués à une baie de brassage de dimensions 1000 mm x 800 mm avec des tiroirs rectangulaires à coins tronqués. En outre, le tronquement des coins permet de gagner en densité sans perturber le câblage puisque le volume utilisé par les coins n'est pas utilisé.

L'armature 2 comprend avantageusement au moins une partie de section horizontale trapézoïdale rectangle à l'intérieure de laquelle sont disposés les tiroirs 3, le trapèze présentant deux faces opposées parallèles 2e,2f, dont une petite base 2e et une grande base 2f, et deux faces opposées non parallèles 2d,2g, l'une des faces opposées non parallèles définissant la face verticale inclinée 2d de l'armature 2, un premier coin tronqué étant situé du côté de la grande base 2f et un deuxième coin tronqué étant situé du côté de la face 2g opposée à la face verticale inclinée 2d.

Telle qu'illustrée à la figure 1, la baie de brassage 1 comporte deux faces inclinées 2d, l'une d'elles accueillant une série de tiroirs 3, tandis que l'autre accueille une série de bandeaux 4 aptes à connecter des câbles de paires de conducteurs en cuivre. On pourrait également envisager que les deux faces inclinées 2d accueillent chacune une série de tiroirs 3.

La figure 2 illustre le tiroir 3 en perspective. Le tiroir 3 présente un grand côté avant 3a destiné à être positionné au niveau de la face inclinée de l'armature et un grand côté arrière 3b destiné à être positionné à l'arrière de la face inclinée de l'armature. Le tiroir 3 présente également deux petits côtés 3c. Du fait du tronquement des coins arrière du tiroir 3, les petits côtés 3c et le grand côté arrière 3b sont plus courts que ceux d'un tiroir rectangulaire non tronqué. Ainsi, chacun des deux coins arrière du tiroir 3 est tronqué et laisse la place à deux coins 3d à angle obtu.

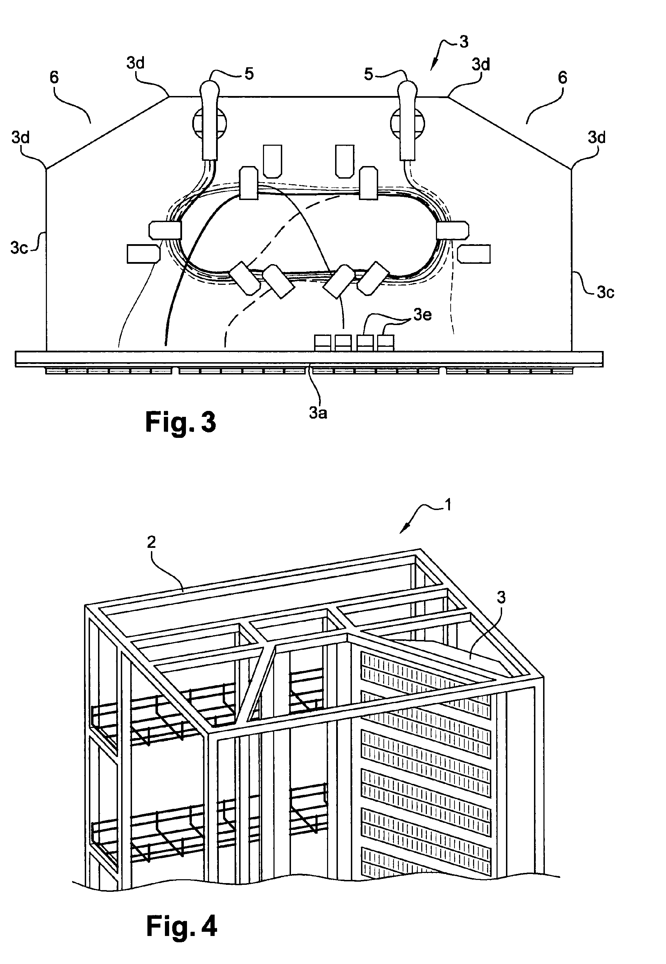

La figure 3, sur laquelle les éléments identiques à ceux de la figure 2 portent les mêmes références, illustre un exemple de réalisation de l'intérieur du tiroir 3. Dans cet exemple, le tiroir 3 connecte des fibres optiques issues de deux câbles 5 reliés à la face arrière 3b du tiroir 3 à des fibres optiques connectées à la face avant 3a du tiroir 3, à l'aide de connecteurs 3e. Le tiroir 3 comprend avantageusement une zone de lovage de fibres. La figure 3 montre également les évidements 6 triangulaires.

La figure 4 est une vue en perspective de la baie de brassage 1.

## Revendications

1. Dispositif (1) de connexion de câbles, comprenant une armature (2) délimitant une face verticale avant (2a) et au moins une face verticale inclinée (2d) par rapport à la face avant (2a), l'armature (2) étant destinée à recevoir des tiroirs de brassage (3) de forme allongée et munis d'une face avant (3a) et d'une face arrière (3b), lesdites faces avant (3a) des tiroirs de brassage (3) étant sensiblement alignées dans le plan de chaque face inclinée (2d) de l'armature (2), chaque tiroir de brassage (3) comprenant deux coins tronqués situés au niveau de la face arrière (3b) du tiroir de brassage (3) et réduisant localement la largeur des tiroirs de brassage (3), le dispositif **caractérisé en ce que** l'armature (2) comprend au moins une partie de section horizontale trapézoïdale rectangle à l'intérieure de laquelle sont disposés les tiroirs de brassage (3), le trapèze présentant deux faces opposées parallèles (2e,2f), dont une petite base (2e) et une grande base (2f), et deux faces opposées non parallèles (2d,2g), l'une des faces opposées non parallèles définissant la face verticale (2d) inclinée de l'armature (2), un premier coin tronqué étant situé du côté de la grande base (2f) et un deuxième coin tronqué étant situé du côté de la face opposée (2g) à la face verticale inclinée (2d).

2. Dispositif (1) selon la revendication 1, **caractérisé en ce que** les tiroirs de brassage (3) comprennent des moyens de connexion (3e) aptes à connecter des paires de conducteurs ou des fibres optiques.

3. Dispositif (1) selon la revendication 1 ou 2, **caractérisé en ce que** les tiroirs de brassage (3) comprennent des zones de lovage de fibres optiques.

## Patentansprüche

1. Kabelverbindungsvorrichtung (1), die ein Gerüst (2) umfasst, das eine vertikale vordere Fläche (2a) und mindestens eine vertikale, im Verhältnis zur vorderen Fläche (2a) geneigte Fläche (2d) begrenzt, wobei das Gerüst (2) zur Aufnahme von länglichen Schaltkästen (3) bestimmt ist, die mit einer vorderen Fläche (3a) und einer hinteren Fläche (3b) ausgestattet sind, wobei die vorderen Flächen (3a) der Schaltkästen (3) etwa in der Ebene jeder geneigten Fläche (2d) des Gerüsts (2) fluchten, wobei jeder Schaltkasten (3) zwei abgestumpfte Ecken umfasst, die sich auf Ebene der hinteren Fläche (3b) des Schaltkastens (3) befinden und lokal die Breite der Schaltkästen (3) reduzieren, wobei die Vorrichtung **dadurch gekennzeichnet ist, dass** das Gerüst (2) mindestens einen Abschnitt mit einem rechtwinkligen trapezförmigen horizontalen Querschnitt umfasst, in dessen Innern die Schaltkästen (3) angeordnet sind, wobei das Trapez zwei gegenüberliegende parallele Flächen (2e, 2f) mit einer kleinen Basis (2e) und einer großen Basis (2f) und zwei gegenüberliegende nicht parallele Flächen (2d, 2g) aufweist, wobei eine der gegenüberliegenden nicht parallelen Flächen die vertikale geneigte Fläche (2d) des Gerüsts (2) definiert, wobei sich eine abgestumpfte Ecke auf der Seite der großen Basis (2f) und sich eine zweite abgestumpfte Ecke auf der Seite der Fläche (2g) befindet, die der geneigten vertikalen Fläche (2d) gegenüberliegt.

2. Vorrichtung (1) nach Anspruch 1, **dadurch gekennzeichnet, dass** die Schaltkästen (3) Verbindungsmittel (3e) umfassen, die imstande sind, Leiterpaare oder optische Fasern zu verbinden.

3. Vorrichtung (1) nach Anspruch 1 oder 2, **dadurch gekennzeichnet, dass** die Schaltkästen (3) Spleißzonen optischer Fasern umfassen.

## Claims

1. A cable connection device (1), comprising a framework (2) delimiting a front vertical face (2a) and at least one inclined vertical face (2d) with respect to the front face (2a), the framework (2) being designed to receive elongated mixing drawers (3) provided with a front face (3a) and a rear face (3b), said front faces (3a) of the mixing drawers (3) being substantially aligned in the plane of each inclined face (2d) of the framework (2), each mixing drawer (3) comprising two truncated corners situated at the rear face (3b) of the mixing drawer (3) and locally reducing the width of the mixing drawer (3), the device being **characterized in that** the framework (2) comprises at least one part with a right angled trapezoidal horizontal section inside which the mixing drawers (3) are positioned, the trapezoid having two parallel opposite faces (2e, 2f), including one with a small base (2e) and one with a large base (2f), and two opposite non-parallel faces (2d, 2g), one of the nonparallel opposite faces defining the inclined vertical face (2d) of the framework (2), a first truncated corner being situated on the side of the large base (2f) and a second truncated corner being situated on the side of the opposite face (2g) across from the inclined vertical face (2d).

2. The device (1) according to claim 1, **characterized in that** the mixing drawers (3) comprise connection means (3e) capable of connecting pairs of conductors or optical fibers.

3. The device (1) according to claim 1 or 2, **characterized in that** the mixing drawers (3) comprise optical fiber coiling areas.
